# EUROPÄISCHE PATENTSCHRIFT

(11) **EP 1 681 236 B1**
(45) Veröffentlichungstag und Bekanntmachung des Hinweises auf die Patenterteilung: **09.07.2008**
(21) Anmeldenummer: 06000910.7
(22) Anmeldetag: 17.01.2006
(51) Int. Cl.: B64C 1/00, B64C 1/18, B64C 1/40

(54) **Strukturelement für ein Flugzeug**
Structural element for an aircraft
Elément structurel pour un aéronef

(30) Priorität: 18.01.2005 DE 102005002370; 18.01.2005 US 644824 P
(43) Veröffentlichungstag der Anmeldung: 19.07.2006
(73) Patentinhaber: Airbus Deutschland GmbH, 21129 Hamburg (DE)
(72) Erfinder: Frankenberger, Eckart, 22605 Hamburg (DE); Konstanzer, Peter, 82024 Taufkirchen (DE)
(74) Vertreter: Kopf, Korbinian Paul

(56) Entgegenhaltungen:
- WO-A-02/23062
- WO-A-02/42854
- DE-C1- 4 310 825
- US-A- 2 361 071
- US-A- 4 849 668
- US-A- 4 958 100
- US-A- 5 713 438
- US-A- 5 765 817
- US-A- 5 894 651
- US-A- 5 973 440
- US-A- 6 123 293
- US-B1- 6 193 032
- US-B1- 6 252 334
- US-B1- 6 480 609
- US-B1- 6 564 640

## Beschreibung

Die vorliegende Erfindung betrifft aktive Strukturelemente von Flugzeugen. Insbesondere betrifft die vorliegende Erfindung ein Strukturelement für ein Flugzeug, umfassend ein aktives Element und ein passives Element, ein Flugzeug, umfassend ein entsprechendes Strukturelement, die Verwendung eines Strukturelements in einem Flugzeug und ein Verfahren zur aktiven Strukturierung von Flugzeugen.

Fußbodenstrukturen, welche Fußbodenquerträger und Sitzschienen umfassen, werden im Rumpf von Flächenflugzeugen mit Nieten rechts und links mit den Spanten verbunden und über die sog. Samerstangen senkrecht nach unten wiederum auf den Spanten abgestützt. Die Sitzschienen verlaufen hierbei quer über die Querträger. Die Fußbodenstrukturen werden mit Hilfe von Fußbodenplatten geschlossen. Durch diese Konstruktion soll ein möglichst steifer Fußboden realisiert werden.

Trotz der oben beschriebenen Versteifung ist die gesamte Rumpfstruktur als elastisches Gebilde zu betrachten. Aufgrund von Böenlasten und Flugmanövern werden die unterschiedlichsten elastischen Verformungen in den Rumpf eingeleitet. Je länger ein Rumpf ist, desto mehr treten Schwingungen auf, welche zu einem sog. "Fishtailing-Effekt" führen können, bei dem das Rumpfheck wie ein Fischschwanz hin und her schwingt. Schwingungen im Rumpf beeinträchtigen den Komfort der Passagiere. Bei sehr großen Fußbodenstrukturen ist zudem auch der Fußboden in Gefahr, als elastische Struktur erlebt zu werden.

Eine weitere Versteifung von Rümpfen stößt gerade bei einem großen Länge/Durchmesser-Verhältnis schnell an Gewichtsprobleme, d. h. weitere Versteifungen durch mehr Material führen zu deutlich mehr Gewichtszuwachs bei relativ geringen Verbesserungen der Steifigkeit.

Die DE 102 26 241 A1 beschreibt ein Verfahren zur Unterdrückung von elastischen Flugzeug-Rumpfbewegungen. Hierbei wird ein Sensor-Messsystem zur Erfassung der Rumpfbewegungen verwendet und die elastischen Rumpfbewegungen werden daraufhin durch ein im Flugzeug angeordnetes Masse-System unterdrückt.

US 6,564,640 B1 offenbart eine Flugzeughaut mit integrierten Aktuatoren und Sensoren zur Messung von Vibrationen der Flugzeughaut.

US 2,361,071 offenbart ein Flugzeug mit elektrischen Vibratoren und Elektromagneten.

Es ist eine Aufgabe der vorliegenden Erfindung, eine verbesserte Rumpfstruktur für Flugzeuge anzugeben.

Gemäß der vorliegenden Erfindung wird die obige Aufgabe mittels einem Strukturelement für Flugzeuge gelöst, das Strukturelement umfassend ein aktives Element, ein passives Element, wobei das aktive Element zur steuerbaren oder regelbaren aktiven Einleitung von Kräften in das passive Element ausgeführt ist, wobei das aktive Element eine Piezokeramik umfasst, wobei die Piezokeramik durch das Anlegen eines Spannungssignals an die Piezokeramik verformbar ist, wobei das passive Element ausgewählt ist aus der Gruppe bestehend aus Fußbodenstruktur, Spant im Fußbodenbereich des Flugzeugs, Querträger im Fußbodenbereich, und Samerstange, und wobei das Strukturelement zur Versteifung eines Rumpfes im Fußbodenbereich, zur Reduzierung von Verformungen des Rumpfes im Fußbodenbereich oder zur Dämpfung von Vibrationen des Rumpfes im Fußbodenbereich ausgeführt ist.

Durch die Ausgestaltung des aktiven Elements zur steuerbaren oder regelbaren aktiven Einleitung von Kräften in das passive Element können gezielt Gegenkräfte an das passive Element angelegt werden, welche beispielsweise einer Verbiegung des Rumpfes, welcher durch das Strukturelement gestützt, gefestigt bzw. stabilisiert wird, entgegenwirken. Somit kann das Verhalten von Rumpfstrukturen aktiv beeinflusst werden, um einer Verformung durch äußere Lasten entgegenzuwirken. Eine solche aktive Kontrolle kann erfindungsgemäß ohne die erwähnten Gewichtsnachteile einer konventionellen massebehafteten Strukturversteifung erfolgen, welche prinzipiell einen erhöhten Materialeinsatz bedeuten würde. Durch die Bereitstellung einer leistungsstarken und schnellen Regelungselektronik können Vibrationen des Rumpfes gedämpft werden, was insbesondere zu einer erheblichen Geräuschunterdrückung in der Kabine führt.

Gemäß einem weiteren Ausführungsbeispiel der vorliegenden Erfindung ist das aktive Element weiterhin zur aktiven Versteifung des Strukturelements ausgeführt, wobei das aktive Element im Wesentlichen in dem passiven Element integriert ist.

Vorteilhafterweise können durch die aktive Einleitung von Kräften in das passive Element, welche zielgerichtet erfolgt, Strukturelemente stabilisiert bzw. versteift werden. Hierdurch kann der Passagierkomfort erhöht werden.

Basierend auf dem inversen piezoelektrischen Effekt kann somit durch eine elektrische Ansteuerung die mechanische Eigenschaft der Piezokeramik verändert werden. Aufgrund der Integration der Keramik in das passive Element lässt sich eine Verformung des Strukturelements aktiv beeinflussen.

Gemäß einem weiteren Ausführungsbeispiel der vorliegenden Erfindung sind elektrische Kontakte zur Messung einer von der Piezokeramik erzeugten Spannung oder einer Kapazität der Piezokeramik vorgesehen, wobei die erzeugte Spannung mit einer auf die Piezokeramik einwirkenden Kraft korrespondiert und wobei die Kapazität mit einer Temperatur der Piezokeramik korrespondiert.

Über die elektrischen Kontakte können demzufolge Spannung oder Kapazität der Piezokeramik gemessen werden. Die Messung erfolgt beispielsweise über eine Messelektronik. Gemäß eines Ausführungsbeispiels der vorliegenden Erfindung wird der gemessene Datensatz nachfolgend innerhalb einer Auswerteelektronik ausgewertet und zur Erzeugung eines Steuer- oder Regelsignals für das aktive Element durch eine Steuerungs-oder Regelungselektronik verwendet.

Vorteilhafterweise kann über eine Erfassung der internen Kräfte und der sie auslösenden Flugmanöver und Böenlasten (über die Flugsteuerung bzw. auch über kleine Piezo-Beschleunigungssensoren) für jeden Zeitpunkt die Wirkung auf den Rumpf erfasst werden.

Somit können aktive und sog. "smarte" Materialien, z. B. auf Basis von Piezokeramiken, an Koppelstellen zwischen Fußbodenstruktur und Spanten, insbesondere Koppelstellenquerträger-Spante und Querträger-Samerstangen, zur aktiven Vibrationsreduktion oder Dämpfung bzw. der Reduzierung von Verformungen des Rumpfes eingesetzt werden.

Gemäß der vorliegenden Erfindung wird zudem ein Verfahren zur aktiven Strukturierung von Flugzeugen angegeben, welches die folgenden Schritte umfasst: Erzeugung eines Steuer- oder Regelsignals für ein aktives Element eines Strukturelements durch eine Steuerungs- oder Regelungselektronik, Ansteuerung des aktiven Elements mit dem Steuer- oder Regelsignal, wobei das Strukturelement das aktives Element und ein passives Element aufweist, wobei das aktive Element zur steuerbaren oder regelbaren aktiven Einleitung von Kräften in das passive Element ausgeführt ist, wobei das aktive Element eine Piezokeramik umfasst, wobei die Piezokeramik durch das Anlegen eines Spannungssignals an die Piezokeramik verformbar ist, wobei das passive Element ausgewählt ist aus der Gruppe bestehend aus Fußbodenstruktur, Spant im Fußbodenbereich des Flugzeugs, Querträger im Fußbodenbereich, und Samerstange, und wobei das Strukturelement zur Versteifung eines Rumpfes im Fußbodenbereich, zur Reduzierung von Verformungen des Rumpfes im Fußbodenbereich oder zur Dämpfung von Vibrationen des Rumpfes im Fußbodenbereich ausgeführt ist.

Mit der vorliegenden Erfindung wird ein einfaches und schnelles Verfahren angegeben, durch welches eine aktive Schwingungsdämpfung oder eine aktive Verformungsreduzierung des Rumpfes oder eine aktive Versteifung des Strukturelements bereitgestellt wird. Die erfindungsgemäße Kontrolle erfolgt hierbei ohne Gewichtsnachteile einer konventionellen massebehafteten Strukturversteifung. Durch das erfindungsgemäße Verfahren kann der Komfort in der Kabine, der durch Schwingungen jeder Art beeinträchtigt wird, weitgehend gewichtsneutral verbessert werden.

Weitere Aufgaben, Ausführungsformen und Vorteile der Erfindung ergeben sich aus den Unteransprüchen und den nebengeordneten Ansprüchen.

Im Folgenden wird die Erfindung anhand von Ausführungsbeispielen unter Bezugnahme auf die Zeichnungen näher beschrieben.

Fig. 1 zeigt eine schematische Querschnittsdarstellung eines Flugzeugrumpfes.

Fig. 2 zeigt eine schematische Darstellung eines aktiven Elements gemäß eines Ausführungsbeispiels der vorliegenden Erfindung.

Fig. 3 zeigt eine schematische Querschnittsdarstellung eines Strukturelements gemäß eines Ausführungsbeispiels der vorliegenden Erfindung, welches in den Rumpf eines Flugzeuges eingebaut ist.

In der folgenden Figurenbeschreibung werden für gleiche oder ähnliche Elemente die gleichen Bezugsziffern verwendet.

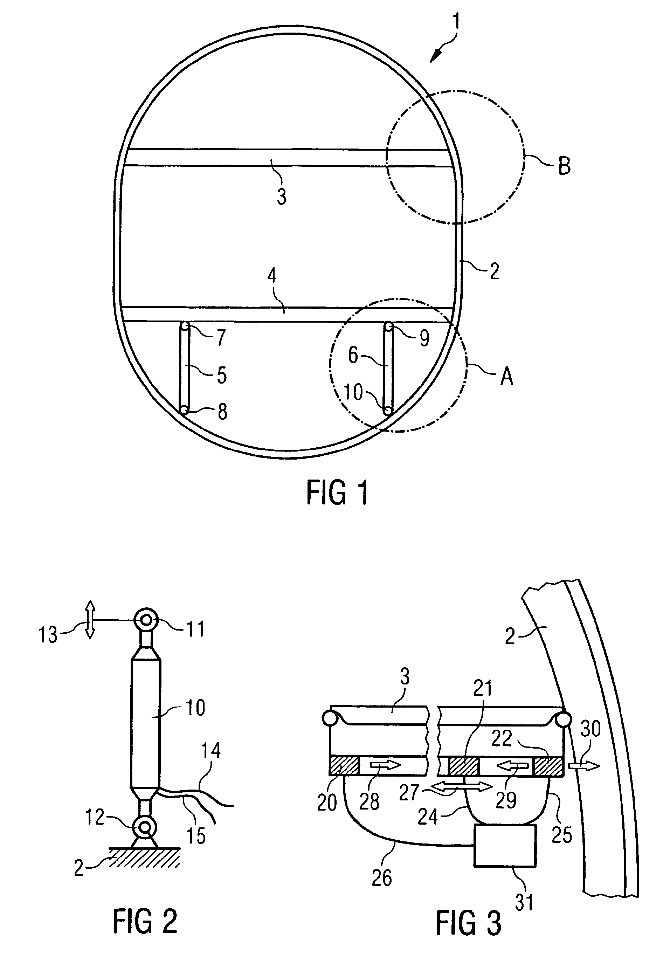

Fig. 1 zeigt eine schematische Querschnittsdarstellung eines Flugzeugrumpfes. Wie Fig. 1 zu entnehmen ist, weist der Flugzeugrumpf 1 eine Außenhülle 2 auf, welche durch Querträger 3, 4 und Samerstangen 5, 6 stabilisiert, gestützt und verstärkt wird. Die Querträger 3, 4, welche die Fußbodenstrukturen im Rumpf des Flugzeugs tragen, sind rechts und links mit den Flugzeugspanten (nicht dargestellt in Fig. 1) über Nieten verbunden. Die Samerstangen 5, 6 dienen dazu, den Fußbodenquerträger 4 nach unten auf den Spanten abzustützen. Durch diese Konstruktion soll ein möglichst steifer Fußboden realisiert werden.

Durch Windböen oder durch die Triebwerke werden teilweise erhebliche Kräfte in die Flugzeugstruktur eingeleitet, welche beispielsweise zu ungewollten Resonanzschwingungen oder Vibrationen führen können. Diese Vibrationen können teilweise zu erheblichen Geräuschbelastungen (beispielsweise hervorgerufen durch Resonanzschwingungen der Panels) und Komfortbeeinträchtigungen (beispielsweise hervorgerufen durch Schwingungen der Sitze) innerhalb der Flugzeugkabine führen. Erfindungsgemäß werden die elastischen Verformungen des Rumpfes aufgrund der oben genannten Lasten ohne eine Erhöhung der Strukturmasse reduziert.

Durch die erfindungsgemäße Verwendung von Strukturelementen, welche aktive und passive Elemente umfassen, kann eine Versteifung des Fußbodens oder des ganzen Rumpfes bezüglich Biegung und Torsion erhöht werden.

Beispielsweise werden, wie in Fig. 1 schematisch dargestellt, aktive Elemente 7, 8, 9, 10 zwischen die Samerstangen 5, 6 und dem Querträger 4 bzw. zwischen den Samerstangen 5, 6 und der Außenhülle 2 (bzw. einem Rumpfspant) angebracht. Die Samerstange 5 und die aktiven Elemente 7, 8 bilden somit ein erfindungsgemäßes Strukturelement aus, welches der Versteifung des Rumpfes, der Reduzierung von Rumpfverformungen und der aktiven Dämpfung von Vibrationen des Rumpfes dient. Ebenso bilden Samerstange 6 und aktive Elemente 9, 10 ein derartiges zweites Strukturelement zu eben diesem Zweck aus.

Fig. 2 zeigt eine schematische Darstellung eines aktiven Elements gemäß eines Ausführungsbeispiels der vorliegenden Erfindung. Es handelt sich hier um den Teilausschnitt A der Fig. 1.

Das aktive Element 10 weist ein oberes Verbindungselement 11 und ein unteres Verbindungselement 12 auf. Weiterhin weist es Leitungen 14, 15 auf, die einer elektrischen, hydraulischen oder pneumatischen Energiezufuhr dienen.

Das untere Verbindungselement 12 ist mit der Außenhaut 2 oder einem Spant verbunden und das obere Verbindungselement 11 ist beispielsweise mit der in Fig. 1 gezeigten Samerstange 6 verbunden. Durch die Einleitung von entsprechenden Steuerungs- oder Regelungssignalen in das aktive Element 10 über die Leitungen 14, 15 bzw. durch die entsprechende Einleitung oder Ausleitung von Hydraulikflüssigkeit oder Druckluft, dehnt sich das aktive Element 10 aus oder zieht sich zusammen. Hierdurch werden Kräfte von dem aktiven Element 10 über das obere Verbindungselement 11 in die Samerstange 6 (s. Fig. 1) eingeleitet, was zu einer Vibrationsdämpfung führen kann. Hierdurch können äußere Kräfte ausgeglichen werden. Die Bewegung des aktiven Elements 10 ist durch Pfeil 13 symbolisiert.

Fig. 3 zeigt eine schematische Querschnittsdarstellung eines Strukturelements gemäß eines Ausführungsbeispiels der vorliegenden Erfindung, welches in den Rumpf eines Flugzeugs eingebaut ist. Es handelt sich hier um den Teilausschnitt B der Fig. 1.

Das erfindungsgemäße Strukturelement besteht aus einem passiven Element 3, bei dem es sich beispielsweise um einen Querträger handelt, der eine Fußbodenstruktur trägt (s. Fig. 1), und aktiven Elementen 20, 21 und 22.

Die aktiven Elemente 20, 21, 22 sind hierbei in Form von Piezokeramiken ausgeführt, welche durch das Anlegen eines Spannungssignals über Zuleitungen 24, 25, 26 verformbar sind. Die Verformung erfolgt hierbei insbesondere über eine Stauchung oder Dehnung der Kristalle 20, 21, 22 in Richtung der Pfeile 27, 28, 29, 30. Sämtliche aktiven Elemente 20, 21, 22 können über die Steuer- und Regelungselektronik 31 angesteuert werden.

Insbesondere kann durch die Einbringung eines Biegemomenten-Paares 21, 22 in den Fußbodenbalken oder Querträger 3 eine Versteifung des Fußbodens erreicht werden. Auch können somit Verformungen des Fußbodens oder des gesamten Rumpfes reduziert werden oder Vibrationen gedämpft werden.

Die Steuer- oder Regelungselektronik 31 kann weiterhin eine Messelektronik und eine Auswerteelektronik umfassen. Die Messelektronik kann zur Messung von physikalischen Variablen verwendet werden, wie beispielsweise einer durch eines der Piezoelemente 20, 21, 22 erzeugten Spannung (welche beispielsweise aufgrund eines auf das Element 20 ausgeübten Druckes erzeugt wird), oder einer Kapazität eines der piezoelektrischen Elemente 20, 21, 22. Über die Spannungsmessung kann auf die auf das entsprechende piezoelektrische Element einwirkende Kraft rückgeschlossen werden und über die Kapazität eines piezoelektrischen Elementes 20, 21, 22 kann beispielsweise auf die Temperatur des entsprechenden Elements rückgeschlossen werden.

Da die Temperatur des piezoelektrischen Elements seinen Dehnungskoeffizienten beeinflusst (mit Dehnungskoeffizient ist hier das Verhältnis zwischen der an ein Piezoelement angelegten Spannung und der daraus resultierenden Stauchung bzw. Ausdehnung des Piezoelements gemeint), kann die Kenntnis der aktuellen Temperatur des Piezoelements vorteilhafterweise dazu eingesetzt werden, die Steuer- oder Regelungssignale zum Antreiben der aktiven Elemente 20, 21, 22 zu eichen. beispielsweise können bei sinkenden Temperaturen die Amplituden der Steuersignale entsprechend erhöht werden, so dass eine gleichmäßige Steuerung gewährleistet ist.

Die Messung der durch die Piezokeramik erzeugten Spannung, welche auf dem direkten piezoelektrischen Effekt beruht, kann hingegen zur Rückschließung auf interne Kräfte in dem Strukturelement verwendet werden. Die entsprechenden Messwerte können dann in der Auswerteelektronik in Verbindung mit Kenntnis der sie auslösenden Flugmanöver und Böenlasten, welche beispielsweise über die Flugsteuerung oder auch über kleine Piezo-Beschleunigungssensoren oder andere Sensoren bereitgestellt werden, erfasst und ausgewertet werden. Somit kann für jeden Zeitpunkt die Wirkung von Böen und Flugmanövern bzw. die Gegenwirkung der aktiven Elemente auf den Rumpf erfasst und ausgewertet werden.

Da sich bei Piezokeramiken, basierend auf dem inversen piezoelektrischen Effekt, durch eine elektrische Ansteuerung die mechanischen Eigenschaften der Keramik verändern lassen, können durch Integration dieser Keramiken in die passiven Elemente der Strukturelemente Verformungen beispielsweise der Fußbodenstruktur aktiv beeinflusst werden. Durch äußere Kräfte hervorgerufene Verformungen lassen sich durch entsprechende Gegenkräfte damit kompensieren. Außerdem lassen sich gezielt Kräfte in die Struktur einleiten und so die Struktur aktiv dämpfen bzw. aktiv versteifen.

Insbesondere bieten Piezokeramiken, welche zur erfindungsgemäßen aktiven Dämpfung bzw. Versteifung und zur Sensorik eingesetzt werden, den Vorteil, dass sie auch bei äußerst tiefen Temperaturen (bis hinab in den Millikelvinbereich), bei niedrigem Luftdruck (bis hinab in den Ultrahochvakuumbereich) und bei hohen Magnetfeldern zuverlässig und störungsfrei einsetzbar sind. Hierdurch ist das erfindungsgemäße Strukturelement nicht nur in der Luftfahrt, sondern beispielsweise auch in der Raumfahrt, wo extreme Umgebungsbedingungen herrschen, einsetzbar.

Aufgrund der hohen Sensitivität der piezoelektrischen aktiven Elemente können auch minimale mechanische Änderungen bzw. Verbiegungen oder Spannungen der Struktur oder aber auch Temperaturänderungen detektiert werden.

Weiterhin kann eine Analyse der Messdatensätze (Strukturkräfte und Flugmanöver) in einem neuronalen Netz innerhalb der Analyseelektronik erfolgen, wodurch verschiedene Lastzustände besser voraussehbar sind, so dass ggf. rechtzeitig entsprechend entgegengewirkt werden kann. Weiterhin kann mit den Daten, beispielsweise über ein finites Elementeverfahren, die Rumpfstruktur bezüglich der unterschiedlichen Belastungssituationen optimiert werden.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Strukturelement für ein Flugzeug, das Strukturelement umfassend:
ein aktives Element (7, 20);
ein passives Element (3);
wobei das aktive Element zur steuerbaren oder regelbaren aktiven Einleitung von Kräften in das passive Element ausgeführt ist;
wobei das aktive Element eine Piezokeramik (20) umfasst;
wobei die Piezokeramik durch das Anlegen eines Spannungssignals an die Piezokeramik verformbar ist;
wobei das passive Element ausgewählt ist aus der Gruppe bestehend aus Fußbodenstruktur, Spant im Fußbodenbereich des Flugzeugs, Querträger (4) im Fußbodenbereich, und Samerstange (5); und
wobei das Strukturelement zur Versteifung eines Rumpfes im Fußbodenbereich, zur Reduzierung von Verformungen des Rumpfes im Fußbodenbereich oder zur Dämpfung von Vibrationen des Rumpfes im Fußbodenbereich ausgeführt ist.

2. Strukturelement nach Anspruch 1,
wobei das aktive Element (7) weiterhin zur aktiven Versteifung des Strukturelements ausgeführt ist; und
wobei das aktive Element (7, 20) im Wesentlichen in dem passiven Element (3) integriert ist.

3. Strukturelement nach Anspruch 1 oder 2,
wobei elektrische Kontakte vorgesehen sind zur Messung einer von der Piezokeramik (20) erzeugten Spannung oder einer Kapazität der Piezokeramik;
wobei die erzeugte Spannung mit einer auf die Piezokeramik einwirkenden Kraft korrespondiert; und
wobei die Kapazität mit einer Temperatur der Piezokeramik korrespondiert.

4. Flugzeug, umfassend ein Strukturelement nach einem der Ansprüche 1 bis 3.

5. Flugzeug nach Anspruch 4, weiterhin umfassend:
eine Messelektronik (31) zur Messung einer von dem aktiven Element erzeugten Spannung oder einer Kapazität des aktiven Elements;
eine Auswerteelektronik (31) zur Auswertung der von der Messelektronik gemessenen Daten;
eine Steuerungs- oder Regelungselektronik (31) zur Erzeugung eines Steuer- oder Regelsignals für das aktive Element.

6. Verwendung eines Strukturelements nach einem der Ansprüche 1 bis 3 in einem Flugzeug.

7. Verfahren zur aktiven Strukturierung von Flugzeugen, umfassend den folgenden Schritt:
Erzeugung eines Steuer- oder Regelsignals für ein aktives Element (7, 20) eines Strukturelements durch eine Steuerungs- oder Regelungselektronik (31);
Ansteuerung des aktiven Elements (7, 20) mit dem Steuer- oder Regelsignal;
wobei das Strukturelement umfasst:
das aktives Element (7, 20);
ein passives Element (3);
wobei das aktive Element zur steuerbaren oder regelbaren aktiven Einleitung von Kräften in das passive Element ausgeführt ist;
wobei das aktive Element eine Piezokeramik (20) umfasst;
wobei die Piezokeramik durch das Anlegen eines Spannungssignals an die Piezokeramik verformbar ist;
wobei das passive Element ausgewählt ist aus der Gruppe bestehend aus Fußbodenstruktur, Spant im Fußbodenbereich des Flugzeugs, Querträger (4) im Fußbodenbereich, und Samerstange (5); und
wobei das Strukturelement zur Versteifung eines Rumpfes im Fußbodenbereich, zur Reduzierung von Verformungen des Rumpfes im Fußbodenbereich oder zur Dämpfung von Vibrationen des Rumpfes im Fußbodenbereich ausgeführt ist.

8. Verfahren nach Anspruch 7, weiterhin umfassend die folgenden Schritte:
Messung von in einem Strukturelement auftretenden Kräften durch eine Messelektronik (31);
Auswertung der von der Messelektronik gemessenen Daten durch eine Auswerteelektronik (31);
Erzeugung eines Steuer- oder Regelsignals für das aktive Element durch die Steuerungs- oder Regelungselektronik (31) auf Basis der Auswertung.

## Claims

1. Structural element for an aircraft, the structural element comprising:
an active element (7, 20);
a passive element (3);
wherein the active element is adapted for the controllable or regulable active introduction of forces into the passive element;
wherein the active element comprises a piezoceramic (20);
wherein the piezoceramic is deformable by the application of a voltage signal to the piezoceramic;
wherein the passive element is selected from the group consisting of floor structure, frame in the floor region of the aircraft, transversal beam (4) in the floor region and Samer rod (5); and
wherein the structural element is designed for stiffening a fuselage in the floor region, for reducing deformation of the fuselage in the floor region or for damping vibrations of the fuselage in the floor region.

2. Structural element according to claim 1,
wherein the active element (7) is further designed for active stiffening of the structural element; and
wherein the active element (7, 20) is substantially integrated in the passive element (3).

3. Structural element according to claim 1 or claim 2,
wherein electrical contacts are provided for measuring a voltage generated by the piezoceramic (20) or a capacitance of the piezoceramic;
wherein the voltage generated corresponds to a force acting on the piezoceramic; and
wherein the capacitance corresponds to a temperature of the piezoceramic.

4. Aircraft comprising a structural element according to any one of claims 1 to 3.

5. Aircraft according to claim 4 further comprising
measuring electronics (31) for measuring a voltage generated by the active element or a capacitance of the active element;
evaluation electronics (31) for the evaluation of the data measured by the measuring electronics;
control or regulating electronics (31) for the generation of a control or regulating signal for the active element.

6. Use of a structural element according to any one of claims 1 to 3 in an aircraft.

7. Method for the active structuring of aircraft comprising the following step:
generation of a control or regulating signal for an active element (7, 20) of a structural element by means of control or regulating electronics (31);
driving the active element (7, 20) with the control or regulating signal,
wherein the structural element comprises:
the active element (7, 20);
a passive element (3);
wherein the active element is designed for the controllable or regulable active introduction of forces into the passive element;
wherein the active element comprises a piezoceramic (20);
wherein the piezoceramic is deformable by the application of a voltage signal to the piezoceramic;
wherein the passive element is selected from the group consisting of floor structure, frame in the floor region of the aircraft, transversal beam (4) in the floor region and Samer rod (5); and
wherein the structural element is designed for stiffening a fuselage in the floor region, for reducing deformation of the fuselage in the floor region or for damping vibrations of the fuselage in the floor region.

8. Method according to claim 7 further comprising the following steps:
measurement of forces occurring in a structural element by means of measuring electronics (31);
evaluation of the data measured by the measuring electronics by means of evaluation electronics (31);
generation of a control or regulating signal for the active element by the control or regulating electronics (31) on the basis of the evaluation.

## Revendications

1. Élément structurel pour un avion, l'élément structurel comprenant :
un élément actif (7, 20);
un élément passif (3);
dans lequel l'élément actif est réalisé pour induire de manière active pouvant être commandée ou régulée des forces dans l'élément passif;
dans lequel l'élément actif comprend une piézocéramique (20);
dans lequel la piézocéramique est déformable par l'application d'un signal de tension à la piézocéramique;
dans lequel l'élément passif est choisi parmi le groupe constitué des éléments suivants:
structure de plancher, couple dans la zone de plancher de l'avion, traverse (4) dans la zone de plancher, et samer barre (5); et
dans lequel l'élément structurel est réalisé pour rigidifier un fuselage dans la zone de plancher, pour réduire des déformations du fuselage dans la zone de plancher ou pour atténuer les vibrations du fuselage dans la zone de plancher.

2. Élément structurel selon la revendication 1,
dans lequel l'élément actif (7) est en outre réalisé pour rigidifier activement l'élément structurel; et
dans lequel l'élément actif (7, 20) est essentiellement intégré dans l'élément passif (3).

3. Élément structurel selon la revendication 1 ou 2,
dans lequel des contacts électriques sont prévus pour mesurer une tension générée par la piézocéramique (20) ou une capacité de la piézocéramique;
dans lequel la tension générée correspond à une force agissant sur la piézocéramique; et
dans lequel la capacité correspond à une température de la piézocéramique.

4. Avion, comprenant un élément structurel selon l'une des revendications 1 à 3.

5. Avion selon la revendication 4, comprenant par ailleurs:
un système de mesure électronique (31) pour mesurer une tension générée par l'élément actif ou une capacité de l'élément actif;
un système électronique d'analyse (31) pour analyser les données mesurées par le système électronique de mesure;
un système électronique de commande ou de régulation (31) destiné à générer un signal de commande ou de régulation pour l'élément actif.

6. Utilisation d'un élément structurel selon l'une des revendications 1 à 3 dans un avion.

7. Procéder pour structurer activement des avions, comprenant les étapes qui consistent à:
produire un signal de commande ou de régulation pour un élément actif (7, 20) d'un élément structurel par un système électronique de commande ou de régulation (31);
piloter l'élément actif (7, 20) avec le signal de commande ou de régulation;
l'élément structurel comprenant:
l'élément actif (7, 20);
un élément passif (3);
l'élément actif étant réalisé pour induire de manière active pouvant être commandée ou régulée des forces dans l'élément passif;
dans lequel l'élément actif comprend une piézocéramique (20);
dans lequel la piézocéramique est déformable par l'application d'un signal de tension à la piézocéramique;
dans lequel l'élément passif est choisi parmi le groupe constitué des éléments suivants :
structure de plancher, couple dans la zone de plancher de l'avion, traverse (4) dans la zone de plancher, et samer barre (5); et
dans lequel l'élément structurel est réalisé pour rigidifier un fuselage dans la zone de plancher, pour réduire des déformations du fuselage dans la zone de plancher ou pour atténuer les vibrations du fuselage dans la zone de plancher.

8. Procédé selon la revendication 7, comprenant en outre les étapes qui consistent à:
mesurer par l'intermédiaire d'un système électronique de mesure (31) des forces survenant dans un élément structurel;
analyser par l'intermédiaire d'un système électronique d'analyse les données mesurées par le système électronique de mesure (31);
générer un signal de commande ou de régulation pour l'élément actif par l'intermédiaire du système électronique de commande ou de régulation (31) sur la base de l'analyse.
